(19) **Europäisches Patentamt / European Patent Office / Office européen des brevets**

(11) **EP 1 525 674 B1**

(12) **EUROPÄISCHE PATENTSCHRIFT**

(45) Veröffentlichungstag und Bekanntmachung des Hinweises auf die Patenterteilung:
**14.02.2007 Patentblatt 2007/07**

(21) Anmeldenummer: **03787584.6**

(22) Anmeldetag: **09.04.2003**

(51) Int Cl.:
**H04B 1/707** (2006.01)

(86) Internationale Anmeldenummer:
**PCT/DE2003/001169**

(87) Internationale Veröffentlichungsnummer:
**WO 2004/017533 (26.02.2004 Gazette 2004/09)**

(54) **VERFAHREN UND VORRICHTUNG ZUR PARAMETERÜBERGABE AN EINEN RAKE-EMPFÄNGER**

METHOD AND DEVICE FOR PASSING PARAMETERS TO A RAKE RECEIVER

PROCEDE ET DISPOSITIF DE TRANSFERT DE PARAMETRES A UN RECEPTEUR RAKE

(84) Benannte Vertragsstaaten:
**DE**

(30) Priorität: **29.07.2002 DE 10234433**

(43) Veröffentlichungstag der Anmeldung:
**27.04.2005 Patentblatt 2005/17**

(73) Patentinhaber: **Infineon Technologies AG**
**81669 München (DE)**

(72) Erfinder:
 • **BECKER, Burkhard**
  **85737 Ismaning (DE)**
 • **DREWES, Christian**
  **80538 München (DE)**

 • **HAAS, Wolfgang**
  **A-2380 Perchtoldsdorf (AT)**
 • **HERNDL, Thomas**
  **A-2362 Biedermannsdorf (AT)**
 • **HOFSTÄTTER, Michael**
  **2380 Perchtoldsdorf (AT)**
 • **ZIMMERMANN, Manfred**
  **81539 München (DE)**

(74) Vertreter: **Patentanwälte Lambsdorff & Lange**
**Dingolfinger Strasse 6**
**81673 München (DE)**

(56) Entgegenhaltungen:
 WO-A-00/69086   WO-A-02/08892
 US-B1- 6 324 210

## EP 1 525 674 B1

**Beschreibung**

Die Erfindung betrifft ein Verfahren und eine Vorrichtung zur Übergabe von Betriebsparametern an einen Rake-Finger eines Rake-Empfängers.

Im Mobilfunk unterliegen Funksignale der Mehrwege-Ausbreitung, d.h. durch Reflexion, Streuung und Beugung des gesendeten Funksignals an diversen Hindernissen im Ausbreitungsweg treten am Empfänger mehrere Empfangssignalversionen auf, die zeitlich zueinander verschoben und unterschiedlich abgeschwächt sind. Das Funktionsprinzip eines Rake-Empfängers beruht darauf, die energiereichsten Empfangssignalversionen getrennt auszuwerten und dann zeitrichtig zu überlagern. Die Bezeichnung Rake (Rechen) beschreibt dabei in bildhafter Weise die Struktur eines solchen Empfängers, wobei die Zinken des Rechens die Rake-Finger repräsentieren und der Stiel des Rechens das ausgangsseitig bereitgestellte überlagerte Empfangssignal darstellt.

Rake-Empfänger sind bekannt und werden in Mobilfunkstationen häufig eingesetzt.

Jeder Rake-Finger arbeitet mit Hilfe eines Satzes von Betriebsparametern, welche die Funktion des Rake-Fingers bestimmen. Der Satz von Betriebsparametern umfasst die Verzögerungszeit, welche den Rake-Finger auf den gewünschten Ausbreitungsweg "setzt", d.h. eine der Empfangssignalversionen auswählt. Bei CDMA-(Code Division Multiple Access-)Systemen kommen weitere Parameter hinzu, um die Entspreizung der empfangenen spreizcodierten Empfangssignalversion in jedem Rake-Finger durchzuführen. Es werden dem Rake-Finger Angaben hinsichtlich der Scrambling-Sequenz und des zu entspreizenden Spreizcodes sowie über den zugrunde liegenden Spreizfaktor in Parameterform mitgeteilt.

Üblicherweise ist der Parametersatz in einem Parameterspeicher abgelegt, auf welchen der Rake-Finger zugreift.

Im Betrieb sind in der Regel nicht alle physikalisch vorhandenen Rake-Finger allokiert. Wenn ein aktiver Rake-Finger mit einem nicht länger benötigten Parametersatz deaktiviert werden soll und ein Rake-Finger mit einem neuen Parametersatz benötigt wird, wird nach bisheriger Vorgehensweise zum Zeitpunkt eines Zeitschlitz- oder Rahmenbeginns rechtzeitig einer der freien Rake-Finger mit dem neuen Parametersatz aktiviert. Das Wechseln von dem Rake-Finger mit dem nicht mehr benötigten Parametersatz zu dem Rake-Finger mit dem neuen Parametersatz erfolgt dann dadurch, dass von dem Ausgang des "alten" Rake-Fingers zu dem Ausgang des "neuen" Rake-Fingers umgeschaltet wird.

Ein Nachteil dieser Vorgehensweise besteht darin, dass zumindest temporär stets die Einrichtung von wenigstens zwei Rake-Fingern für einen Wechsel der Parametersätze erforderlich ist. Dies bedeutet eine erhöhte Leistungsaufnahme und außerdem die Notwendigkeit, stets freie (nicht-allokierte) Rake-Finger für einen Wechsel vorrätig zu halten.

US 6,324,210 B1 offenbart ein Verfahren und eine Vorrichtung zur Übergabe von Parametern an einen Rake-Finger eines Rake-Empfängers.

Der Erfindung liegt die Aufgabe zugrunde, ein Verfahren und eine Vorrichtung zur Übergabe von Parametern an einen Rake-Finger zu schaffen, welches bzw. welche ein flexibles und Resourcen-schonendes Umprogrammieren eines Rake-Empfängers ermöglicht.

Die der Erfindung zugrunde liegende Aufgabenstellung wird durch die Merkmale der unabhängigen Ansprüche gelöst.

Nach Anspruch 1 wird der Rake-Finger zunächst mit einem ersten Parametersatz betrieben, indem der Rake-Finger auf den in einem ersten Speicherbereich gehaltenen ersten Parametersatz zugreift. Im Falle eines gewünschten Parametersatzwechsels wird ein zweiter Parametersatz in einen zweiten Speicherbereich geladen. Es wir überprüft, ob eine Umschaltbedingung vorliegt. Sobald dies der Fall ist, wird der Zugriff des Rake-Fingers von dem ersten Speicherbereich in den zweiten Speicherbereich umgeschaltet.

Die Erfindung ermöglicht eine Neu-Allokierung des Rake-Fingers, ohne dass ein zusätzlicher Rake-Finger zu diesem Zweck aktiviert werden muss. Statt einer Umschaltung der Ausgänge verschiedener Rake-Finger erfolgt eine Umschaltung der Parametersätze während des Betriebes ein und desselben Rake-Fingers. Eine Unterbrechung des Betriebes des Rake-Fingers kann ausgeschlossen werden, da aufgrund der zwei Speicherbereiche keine Wartezeit für die Aktualisierung des Speicherinhalts des ersten Speicherbereiches auftritt.

Vorzugsweise erfolgt das Überprüfen des Vorliegens der Umschaltbedingung in Zeitabständen eines festen Zeitrasters. Vorzugsweise betragen die Zeitabstände jeweils vier Chip-Zeitdauern und korrespondieren dabei mit dem Abarbeitungsraster, welches für die Entspreizung der Daten in den Rake-Fingern bei einem Spreizfaktor von vier oder einem ganzen Vielfachen davon verwendet wird.

Eine vorteilhafte Verfahrensvariante kennzeichnet sich dadurch, dass der zweite Parametersatz in den ersten Speicherbereich geladen wird. Dadurch wird der erste Speicherbereich wieder mit den aktuellen Parametern versorgt. Das Zugreifen des Rake-Fingers auf den zweiten Parametersatz und das Laden des zweiten Parametersatzes in den ersten Speicherbereich kann vorzugsweise zeitgleich mittels ein und derselben auf den zweiten Speicherbereich ausgeübten Leseoperation erfolgen.

Zur Vorbereitung des Parameterwechsels muss der zweite Parametersatz zunächst in den zweiten Speicherbereich geladen werden. Eine vorteilhafte Maßnahme des erfindungsgemäßen Verfahrens besteht darin, dass dabei in einem Verwaltungsspeicher ein Änderungsflag gesetzt wird und eine Zeitinformation eingetragen wird, die angibt, zu welchem Zeitpunkt die Umschaltung des Rake-Fingers erfolgen soll. Durch das Auswerten der Zeitinformation (sofern das Änderungsflag gesetzt ist) kann bei Erreichen des Umschaltzeitpunkts sofort die Umschaltung zwischen den Speicherzugriffen (und damit zwischen den beiden Parametersätzen) erfolgen.

Die erfindungsgemäße Vorrichtung zur Übergabe von Parametern an einen Rake-Finger eines Rake-Empfängers kennzeichnet sich durch einen ersten Speicherbereich für einen ersten Parametersatz von Betriebsparametern für den Rake-Finger, einen zweiten Speicherbereich für einen zweiten Parametersatz von Betriebsparametern für den Rake-Finger, ein Steuermittel, welches überprüft, ob eine Umschaltbedingung vorliegt, und ein Umschaltmittel, welches ein Umschalten des Zugriffs des Rake-Fingers von dem ersten Speicherbereich in den zweiten Speicherbereich vornimmt, sobald das Steuermittel das Vorliegen der Umschaltbedingung feststellt. Durch das Vorsehen zweier Speicherbereiche, in denen der bisherige (erste) und der neue (zweite) Parametersatz gleichzeitig für den Rake-Finger verfügbar gehalten werden, lässt sich eine Umschaltung der Parametersätze ohne eine Unterbrechung des Demodulationsbetriebes des betrachteten Rake-Fingers realisieren.

Vorzugsweise umfasst die Vorrichtung eine Datenverbindung, über welche sowohl der Rake-Finger als auch der erste Speicherbereich auf die Daten des zweiten Speicherbereichs zugreifen können. Auf diese Weise lässt sich erreichen, dass sofort (d.h. bereits im ersten Zyklus) nach der Umschaltung der erste Speicherbereich mit den neuen Parametern aktualisiert wird.

Eine weitere vorteilhafte Ausgestaltung der erfindungsgemäßen Vorrichtung kennzeichnet sich dadurch, dass der zweite Speicherbereich durch mehrere einzelne RAM-Speicher realisiert ist. Durch das Vorsehen mehrerer Speicher kann erreicht werden, dass in jedem Systemtakt ein Lesezugriff seitens des umzuprogrammierenden Rake-Fingers auf den zweiten Speicherbereich durchgeführt werden kann und zudem ein DSP (digitaler Signalprozessor) zusätzlich diesen zweiten Speicherbereich beschreiben kann. In diesem Fall kann der zweite Speicherbereich mit Single-Port RAMs ausgeführt werden.

Weitere vorteilhafte Ausgestaltungen der Erfindung sind in den Unteransprüchen angegeben.

Die Erfindung wird nachfolgend anhand von Ausführungsbeispielen unter Bezugnahme auf die Zeichnung näher erläutert; in dieser zeigt:

Fig. 1    ein Blockschaltbild eines Rake-Empfängers;

Fig. 2    eine schematische Darstellung mehrerer Multicode-Rake-Finger jeweils bestehend aus vier parallel angeordneten Einzeldemodulatoren;

Fig. 3    die Architektur eines Ausführungsbeispiels einer erfindungsgemäßen Vorrichtung zu Übergabe von Parametern an den in Fig. 2 dargestellten Multicode-Rake-Finger;

Fig. 4    ein Ablaufdiagramm zur Erläuterung eines Ausführungsbeispiels des erfindungsgemäßen Verfahrens zur Übergabe von Parametern an den Rake-Finger; und

Fig. 5    ein Schaubild zur Erläuterung der zeitlichen Abfolge von Schreib- und Lesezugriffen der in Fig. 3 dargestellten Vorrichtung.

Im Folgenden wird ein CDMA-System betrachtet, wie es beispielsweise in dem Mobilfunkstandard UMTS (Universal Mobile Telecommunications System) verwendet wird. Bei der Bandspreiztechnik werden den senderseitig auszusendenden Symbolen sogenannte Spreizcodes aufgeprägt, welche die einzelnen Symbole anschaulich gesprochen in Art eines Fingerabdrucks voneinander unterscheidbar machen. Ein Spreizcode ist eine Folge von Chips, deren Anzahl als Spreizfaktor sf bezeichnet wird. Die Chip-Zeitdauer ist in CDMA-Systemen vorgegeben und beträgt in UMTS $1/(3.84 \text{ MHz})$.

Eine Anzahl von 2560 Chips bildet einen Zeitschlitz (slot). Fünfzehn Zeitschlitze werden zu einem Rahmen (frame) zusammengefasst. Rahmen-, Zeitschlitz- und Chip-Zeitdauer sind in UMTS also fest vorgegeben.

Neben der Spreizcodierung von teilnehmerspezifischen Daten werden im UMTS-Standard auch Daten, die für'mehrere Empfänger bestimmt sind (z.B. systemrelevante Daten) bandgespreizt. Zusätzlich werden bei UMTS-Systemen die gespreizten Daten mit einer Basisstations-spezifischen Scrambling-Sequenz multipliziert.

Die Signalübertragung von einer Basisstation zu einer Mobilstation (downlink) sowie von einer Mobilstation zu einer Basisstation (uplink) erfolgt über sogenannte physikalische Kanäle. Die physikalischen Kanäle eines Mobilfunksystems sind ebenfalls durch Standardisierung vorgegeben. Jeder physikalische Kanal ist durch Vorschriften für die Spreizcodierung und eine bestimmte Datenstruktur gekennzeichnet. Während einige physikalische Kanäle nur zur Übertragung von Signalen mit einem festen Spreizfaktor sf vorgesehen sind, können in anderen physikalischen Kanälen übertragene Signale einen variablen Spreizfaktor aufweisen.

Die über die verschiedenen physikalischen Kanäle übertragenen Signale werden alle von dem Rake-Empfänger demoduliert. Üblicherweise sind mehrere physikalische Kanäle (Kontrollkanäle, teilnehmerspezifische Datenkanäle, etc.) gleichzeitig zu demodulieren. Für jedes zu demodulierende Signal (d.h. für jeden aktuell benutzten physikalischen Kanal) sind die folgenden Schritte durchzuführen:

- Schätzen der zeitlichen Verzögerungen $\tau$ der einzelnen Ausbreitungswege;
- Eliminieren der Verzögerungen $\tau$;
- zeitrichtiges Korrelieren der Wegekomponenten mit Chip-Sequenzen d*, welche komplexwertig konjugierte Produkte aus Spreizcode und Scrambling-Sequenz sind;
- Schätzen eines komplexwertigen Gewichts c für jeden Ausbreitungsweg;
- Multiplizieren der jeweiligen Wegekomponente mit ihrem komplexwertigen Gewicht c; und
- Kombinieren der synchronisierten, entspreizten und mit den jeweiligen komplexwertigen Gewichten multiplizierten Wegekomponenten zur Rekonstruktion des ausgesendeten Signals.

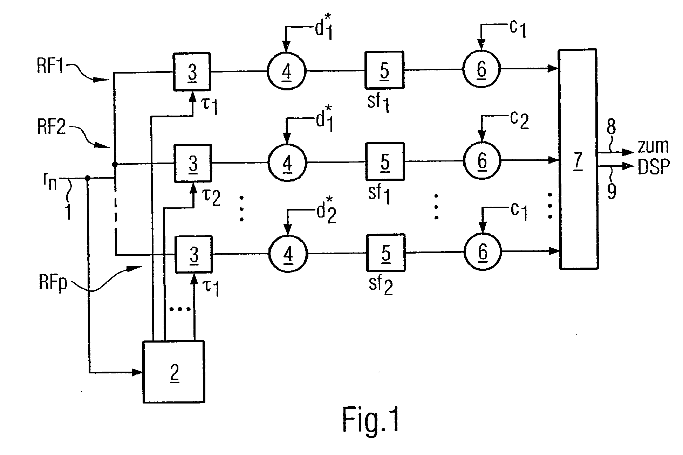

Fig. 1 verdeutlicht den bekannten Aufbau eines Rake-Empfängers.

An einem Eingang 1 wird ein zeitdiskretisiertes Empfangssignal $r_n$ eingegeben. n ist der Abtast-Index, d.h. die diskretisierte Zeit. Das Empfangssignal $r_n$ wird in üblicher Weise durch Abtastung und Digitalisierung eines mittels einer nicht dargestellten Hochfrequenzstufe (Antenne, Eingangsfilter, Mischstufe) erzeugten analogen Zwischenfrequenz- oder Basisbandsignals erzeugt. Die Abtastfrequenz $T_s^{-1}$ muss in Bezug auf die Chiprate $T_c^{-1}$ (3.84 MHz) die Nyquist-Bedingung erfüllen.

Zur einfacheren Erläuterung wird im folgenden angenommen, dass der Rake-Empfänger (mehrere) Signale von nur einer Basisstation empfängt. Der Index j kennzeichnet die verschiedenen Signale. Der Index i kennzeichnet die verschiedenen Ausbreitungswege zwischen der Basisstation und der Empfangsantenne des Rake-Empfängers. Das Empfangssignal $r_n$ wird sowohl einer Mehrzahl von p Rake-Fingern RF1, RF2, ..., RFp identischen Aufbaus als auch einer Einheit 2 zur Schätzung der (Mehrwege-)Verzögerungen $\tau_i$ zugeführt. Jeder Rake-Finger RF1, RF2, ..., RFp besteht aus einer eingangsseitig angeordneten Verzögerungsstufe 3, einem Korrelator 4, einem Akkumulator 5 und einem Multiplizierer 6. Die Ausgänge der einzelnen Rake-Finger RF1, RF2, ..., RFp werden einem Kombinierer 7 zugeführt. Dieser ist ausgangsseitig mit einem DSP verbunden.

In der Einheit 2 zur Schätzung der Verzögerungen $\tau_i$ wird das Kanalprofil bestimmt (d.h. es werden die Energien der über die verschiedenen Ausbreitungswege i übertragenen Signalkomponenten ermittelt). Anhand des Kanalprofils werden die Verzögerungen $\tau_i$ der energiereichsten Ausbreitungswege bestimmt. Beispielsweise werden für eine über den Ausbreitungsweg i = 1 übertragene Signalkomponente die Verzögerung $\tau_1$ ermittelt und der Verzögerungsstufe 3 des ersten Rake-Fingers RF1 zugeführt, für einen zweiten Ausbreitungsweg i = 2 wird die Verzögerung $\tau_2$ ermittelt und der Verzögerungsstufe 3 des zweiten Rake-Fingers RF2 zugeführt, ..., und der Verzögerungsstufe 3 des p-ten Rake-Fingers RFp wird die Verzögerung $\tau_1$ des Ausbreitungsweges i = 1 zugeführt.

Die ersten beiden Rake-Finger RF1 und RF2 sollen dasselbe Signal j = 1 mit dem Spreizfaktor $sf_j$, also $sf_1$, demodulieren. Deshalb wird den Korrelatoren 4 der Rake-Finger RF1 und RF2 ein und dieselbe teilnehmerspezifische Chipsequenz $d_j^*$ (welche ein Produkt aus Spreizcode und Scrambling-Sequenz der Basisstation ist), also $d_1^*$, zur Entspreizung zugeführt. Der Korrelator 4 des Rake-Fingers RFp entspreizt ein anderes Signal j = 2 mit der Chipsequenz $d_2^*$, deren Spreizfaktor $sf_2$ beträgt. Der hochgestellte Index * steht für die komplexe Konjugation.

Durch die Verwendung unterschiedlicher Spreizcodes in den Rake-Fingern RF1 und RFp werden die über den gleichen Weg i = 1 übertragenen Signale in den Fingern RF1 und RFp Code-spezifisch separiert.

Die gegebenenfalls unterschiedlichen Spreizfaktoren $sf_1$ und $sf_2$ werden den zugehörigen Akkumulatoren 5 in den Rake-Fingern RF1, RF2, RFp mitgeteilt. Die Akkumulatoren 5 nehmen gemäß dem jeweiligen Spreizfaktor eine Akkumulation der Chips über eine Symbolzeitdauer $T_j$ vor (d.h. sie führen $sf_j$ Akkumulationen durch, $T_j = sf_j . T_c$) . Die hinter den Akkumulatoren 5 im (jeweiligen) Symboltakt vorliegenden Daten werden in den Multiplizierern 6 mit den in einem Kanalschätzer (nicht dargestellt) ermittelten komplexwertigen Gewichten $c_i$ multipliziert. Diese sind für die Rake-Finger RF1 und RFp identisch, da derselbe Ausbreitungsweg i = 1 (ausgehend von derselben Basisstation) betrachtet wird, und lauten $c_1$. Der einem anderen Ausbreitungsweg i = 2 zugeordnete Rake-Finger RF2 wird mit anderen komplexwertigen Gewichten $c_2$ versorgt.

Der Kombinierer 7 kombiniert die zu denselben Signalen j gehörenden Wegekomponenten. In dem hier gezeigten Beispiel werden die zu dem Signal j = 1 gehörenden Ausgänge der Rake-Finger RF1 und RF2 kombiniert und über einen Ausgang 8 ausgegeben, während der Ausgang des zu dem Signal j = 2 gehörenden Rake-Fingers RFp unkombiniert an einem Ausgang 9 des Rake-Empfängers bereitgestellt wird.

Fig. 1 macht deutlich, dass jeder Rake-Finger RF1, RF2, ..., RFp für den Betrieb mittels der Parameter $\tau_i$, $sf_j$ und charakteristischen Angaben hinsichtlich der Chipsequenz $d_j^*$ allokiert werden muss, d.h. einem bestimmten Ausbreitungsweg i eines bestimmten Signals j zugewiesen wird (die komplexen Gewichte $c_i$ werden ständig neu ermittelt und sind keine Parameter zur Allokation des Fingers).

Es wird darauf hingewiesen, dass die Verzögerungsstufe 3 auch an anderer Stelle im Signalweg, z.B. hinter den Multiplizierern 6, angeordnet sein kann.

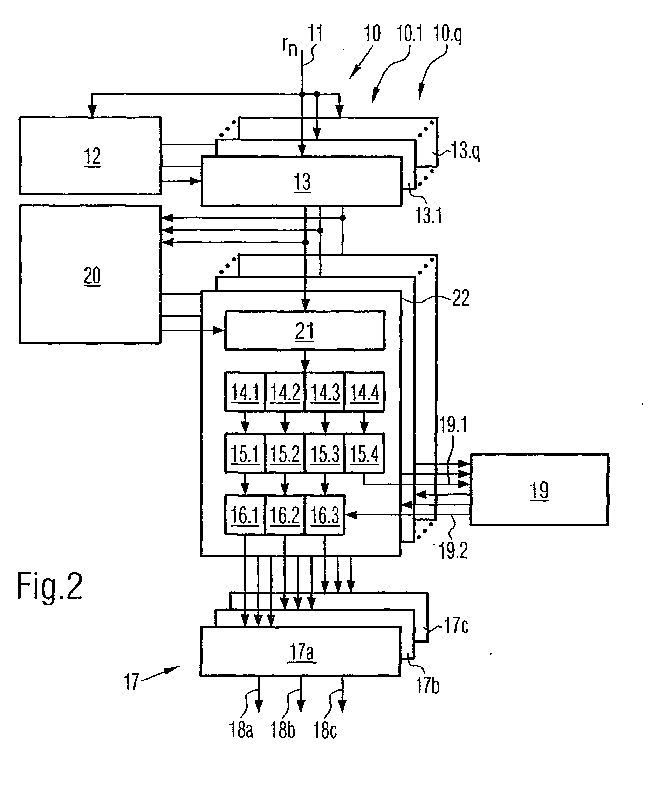

Fig. 2 zeigt eine Variante des in Fig. 1 dargestellten Rake-Empfängers. Es sind ein 4-kanaliger Multicode-Rake-Finger 10 sowie perspektivisch dahinterliegend dargestellte 4-kanalige Multicode-Rake-Finger 10.1 und 10.q identischen Aufbaus dargestellt. Insgesamt umfasst der in Fig. 2 dargestellte Rake-Empfänger also eine Anzahl q+1 von 4-kanaligen Multicode-Rake-Fingern 10; 10.1; ...; 10.q, die im folgenden als MC-Rake-Finger 10; 10.1; ...; 10.q bezeichnet werden.

Der MC-Rake-Finger 10 weist eingangsseitig eine einzige, gemeinsame Verzögerungsstufe 13 auf, die über den Eingang 11 das zeitdiskretisierte Empfangssignal $r_n$ erhält. Im weiteren Signalweg ist ein Interpolator 21 vorgesehen. Das Ausgangssignal des Interpolators 21 wird vier parallel angeordneten Korrelatoren 14.1, 14.2, 14.3, 14.4 zugeleitet. Den Korrelatoren 14.1, ..., 14.4 sind vier parallel liegende Akkumulatoren 15.1, 15.2, 15.3, 15.4 nachgeordnet, von denen jeder ein Ausgangssignal eines der Korrelatoren 14.1, ..., 14.4 empfängt. Die Ausgangssignale der Akkumulatoren 15.1, 15.2, 15.3 werden drei parallel angeordneten Gewichtungseinheiten (Multiplizierern) 16.1, 16.2, 16.3 zugeleitet.

Die Ausgänge der drei Gewichtungseinheiten 16.1, 16.2, 16.3 werden einem Kombinierer 17 zugeleitet, der drei Addierer 17a, 17b und 17c umfasst. Der Ausgang des Addierers 17a ist mit dem Bezugszeichen 18a, der Ausgang des Addierers 17b ist mit dem Bezugszeichen 18b und der Ausgang des Addierers 17c ist mit dem Bezugszeichen 18c bezeichnet.

Dem MC-Rake-Finger 10 ist eine Einheit 19 zum Schätzen der komplexwertigen Kanalgewichte $c_i$ zugeordnet. Die Einheit 19 steht über eine Verbindung 19.1 mit dem Ausgang des Akkumulators 15.4 in Verbindung und liefert über die Verbindung 19.2 die (identischen) komplexwertigen Kanalgewichte $c_i$ für die drei Gewichtungseinheiten 16.1, 16.2 und 16.3.

Die weiteren in Fig. 2 erkennbaren MC-Rake-Finger 10.1 und 10.q weisen ebenfalls jeweils eine Verzögerungsstufe 13.1, 13.q und bezüglich der in dem Rahmen 22 dargestellten Baugruppen 21, 14.1-4, 15.1-4, 16.1-3 einen identischen Aufbau auf.

Der Strukturierung des Rake-Empfängers in MC-Rake-Finger 10, 10.1, ..., 10.q liegt folgendes Konzept zugrunde:

Jeder MC-Rake-Finger 10; 10.1; ...; 10.q wird auf einen bestimmten Ausbreitungsweg i, i = 0, ..., q, gesetzt (d.h. mit einer bestimmten Verzögerung $\tau_i$ betrieben) und kann drei verschiedene Datensignale j = 1, 2, 3 und ein Kontrollsignal j = 4 gleichzeitig demodulieren. Die Korrelatoren 14.1, 14.2, 14.3, Akkumulatoren 15.1, 15.2, 15.3 und Gewichtungseinheiten 16.1, 16.2, 16.3 dienen zur Demodulation der Datensignale j = 1, 2, 3, wobei der Spreizfaktor $sf_j$ dieser Signale variabel und untereinander unterschiedlich sein kann. Neben den drei für den Datenempfang vorgesehenen Demodulator-Einheiten 14.1, 15.1, 16.1; 14.2, 15.2, 16.2; 14.3, 15.3, 16.3 ist die weitere Demodulator-Einheit 14.4, 15.4 zur Demodulation eines Pilotsignals für die Kanalschätzung ausgelegt.

D.h., jede der drei Demodulator-Einheiten 14.1, 15.1, 16.1; 14.2, 15.2, 16.2; 14.3, 15.3, 16.3 eines MC-Rake-Fingers 10 ist ein vollwertiger Rake-Finger gemäß Fig. 1. Auf die dortigen Ausführungen zur Funktionsweise der einzelnen Komponenten wird Bezug genommen. Lediglich der baulich vereinfachte Demodulator 14.4, 15.4 ist allein für Messaufgaben vorgesehen und aufgrund des Fehlens einer Gewichtungseinheit für den Datenempfang nicht geeignet.

Die Mehrwegeverzögerung $\tau_i$ für den Rake-Finger 10 wird zweistufig geschätzt und ausgeglichen. Zunächst erfolgt mittels der Einheit 12 eine Schätzung der Mehrwegeverzögerung $\tau_i$ im Abtastzeitraster, d.h. mit einer durch die Abtastrate $T_s^{-1}$ bzw. $(T_s/2)^{-1}$ begrenzten Genauigkeit. Die daraufhin erfolgende Grob-Verzögerungseinstellung wird von der Verzögerungsstufe 13 vorgenommen. Eine genauere Auflösung der Mehrwegeverzögerung wird anschließend mit der Einheit 20 zur Berechnung eines Interpolationsparameters (d.h. eines Abtastzeitfehlers) erreicht. Der Interpolator 21 wird mit dem berechneten Interpolationsparameter angesteuert und erzeugt interpolierte Datenwerte an der von dem Interpolationsparameter bestimmten Stützstelle. Bei der Einheit 20 zur Berechnung eines Interpolationsparameters kann es sich beispielsweise um einen Early/Late-Korrelator handeln.

Die beiden Stufen 12, 13 und 20, 21 können - wie in Fig. 1 dargestellt - auch einstufig ausgeführt sein. Ferner können die beiden der Verzögerungsstufe 3 entsprechenden Einheiten 13, 21, wie zu Fig. 1 beschrieben, auch an anderer Stelle im Signalweg angeordnet sein.

An dem Ausgang 18a des Addierers 17a werden die Daten des Signals j = 1 ausgegeben, an dem Ausgang 18b des zweiten Addierers 17b werden die Daten des Signals j = 2 ausgeben und an dem Ausgang 18c des dritten Addierers 17c werden die Daten des dritten Signals j = 3 bereitgestellt. q+1 Ausbreitungswege können maximal berücksichtigt werden.

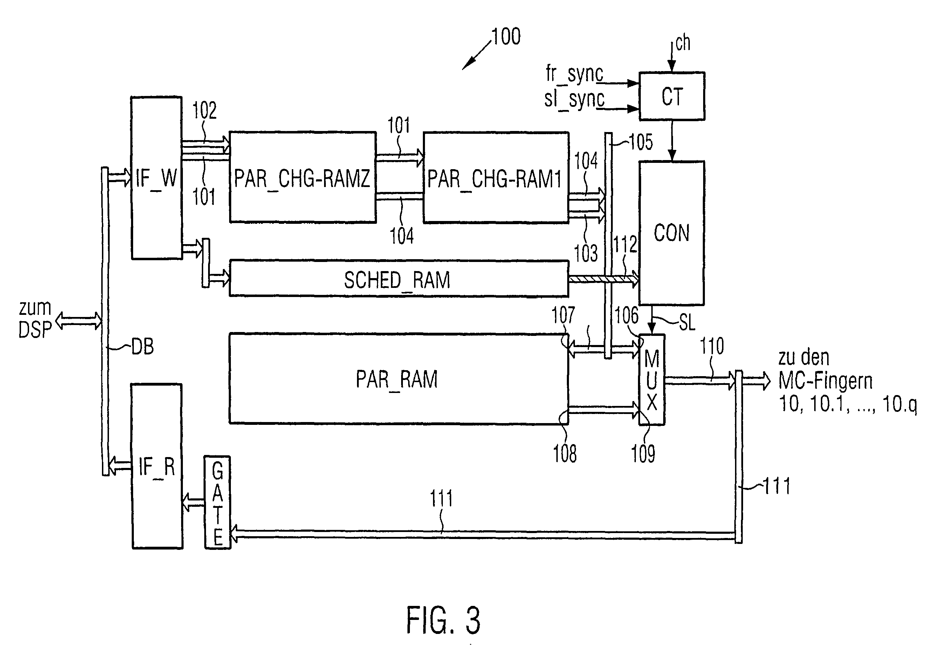

Fig. 3 zeigt eine erfindungsgemäße Vorrichtung 100 zur Übergabe von Parametern an die in Fig. 2 dargestellten MC-Rake-Finger 10, 10.1, ..., 10.q. Die Vorrichtung 100 umfasst einen Parameterspeicher PAR_RAM, einen ersten Parameter-Änderungsspeicher PAR_CHG__RAM1, einen zweiten Parameter-Änderungsspeicher PAR_CHG_RAM2 und einen Verwaltungsspeicher SCHED__RAM. Die beiden ersten und zweiten Parameter-Änderungsspeicher PAR_ CHG__RAM1 und PAR_CHG_RAM2 stehen über einen Datenbus DB, eine Schreib-Schnittstelle IF_W und erste und zweite Datenverbindungen 101 bzw. 102 mit dem DSP in Verbindung. Ausgangsseitig, d.h. für einen Lesezugriff, stehen die beiden ersten und zweiten Parameter-Änderungsspeicher PAR_CHG__RAM1/2 über Datenverbindungen 103 bzw. 104 mit einer Datenverbindung 105 in Verbindung, welche zu einem ersten Eingang 106 eines Multiplexers MUX führt. Gleichzeitig steht die Datenverbindung 105 mit einem Schreib-Eingang 107 des Parameterspeichers PAR_RAM in Verbindung. Ein Lese-Ausgang 108 des Parameterspeichers PAR_RAM ist dem zweiten Eingang 109 des Multiplexers MUX zugeführt. Der Ausgang des Multiplexers MUX steht über die Datenverbindung 110 mit den MC-Rake-Fingern 10, 10.1, ..., 10.q in Verbindung, um diesen die Möglichkeit zu geben, zu jedem Zeitpunkt auf die aktuellen Parameter zuzugreifen. Darüber hinaus ist eine Datenverbindung 111 vorgesehen, über welche der DSP zu Kontrollzwecken Zugriff auf die aktuellen Parameter nehmen kann. Der Zugriff des DSP erfolgt über den Datenbus DB, eine Lese-Schnittstelle IF_R und das Tor GATE.

Ferner umfasst die Vorrichtung 100 eine Steuerung CON, die in noch näher zu beschreibender Weise die Lese- und Schreibabläufe in der Vorrichtung 100 steuert. Die Steuerung CON steht eingangsseitig mit einem Chip-Zähler CT in Verbindung, und greift lesend über eine Datenverbindung 112 auf den Verwaltungsspeicher SCHED_RAM zu. Über eine Steuerleitung SL steht die Steuerung CON mit dem Schalteingang des Multiplexers MUX in Verbindung. Weitere Steuerleitungen für die Schreib-/Leseumschaltung der einzelnen Datenspeicher PAR_RAM, PAR_CHG_ RAM1/2, SCHED_RAM usw. sind in der Fig. 3 aus Gründen der Übersichtlichkeit nicht dargestellt.

Im Folgenden wird in beispielhafter Weise davon ausgegangen, dass q = 31 gilt, d.h., dass der Rake-Empfänger 32 MC-Rake-Finger 10, 10.1, ..., 10.q umfasst.

Der Inhalt des Parameterspeichers PAR_RAM wird durch die Tabelle 1 erläutert.

Tabelle 1

| MC_1_1 | ena_1_1, deloff_1;<br>scr_gen_id_1_1, scr_gen_offset_1_1. spr_gen_id_1_1, spr_gen_offset_1_1:<br>sf_1_1;<br>stot_format_1_1;<br>sttd_1;<br>mrc_id_1_1; |
|---|---|
| MC_1_2 | |
| MC_1_3 | |
| MC_1_4 | |
| .... | |
| MC_16_1 | |
| MC_16_2 | |
| MC_16_3 | |
| MC_16_4 | |
| .... | |
| MC_32_1 | |
| MC_32_2 | |
| MC_32_3 | |
| MC_32_4 | |

Folgende Notation wird verwendet: r bezeichnet die Nummer des MC-Rake-Fingers, r = 1, ..., 32, und y bezeichnet die Demodulator-Einheit des MC-Rake-Fingers, y = 1, ..., 4. Mit z.B.

r = 1 und y = 1 werden also die Einheiten 12, 13, 20, 21, 17 (nur abhängig von r) und 14.1, 15.1, 16.1 (abhängig von r und von y) des in Fig. 2 dargestellten MC-Rake-Fingers 10 bezeichnet.

In der ersten Spalte der Tabelle 1 sind die Demodulator-Einheiten sämtlicher MC-Rake-Finger in der Notation MC_r_y angegeben.

In der zweiten Spalte der Tabelle 1 sind die Parameter zu den Demodulator-Einheiten der MC-Rake-Finger MC_r_y eingetragen. Die Abhängigkeiten der Parameter von r und y gehen aus der Notation hervor. Dabei bezeichnen:

| | |
|---|---|
| ena_r_y: | Aktivierungs-Bit (EIN/AUS) |
| deloff_r: | Verzögerung $\tau$ |
| scr_gen_id_r_y: | Generator-Identifikations-Nummer der Scrambling-Sequenz |
| scr_gen_offset_r_y: | Offset-Sequenz der Scrambling-Sequenz |
| spr_gen_id_r_y: | Generator-Identifikations-Nummer des Spreizcodes |
| spr_gen_offset_r_y: | Offset-Sequenz des Spreizcodes |
| sf_r_y: | Spreizfaktor sf |
| slot_format_r_y: | Identifikationsinformation für das Zeitschlitz-Format |
| sttd_r: | Anzeigebit für den Mehrantennenmodus |
| mrc_id_r_y: | Identifikationsnummer des Signals (physikalischen Kanals) |

Die Parameter Generator-Identifikations-Nummer (scr_gen_id_r_y bzw. spr_gen_id_r_y) und Offset-Sequenz (scr_gen_offset_r_y bzw. spr_gen_offset_r_y) legen die verwendete Scrambling-Sequenz bzw. den verwendeten Spreizcode fest. Dem Fachmann ist bekannt, dass die Scrambling-Sequenz und der Spreizcode durch Code-Generatoren erzeugt werden, wobei die Anfangsbeschaltung der Code-Generatoren durch eine im Standard festgelegte Offset-Sequenz bestimmt wird. Die Code-Sequenzen können nun durch eine Anzahl von hardware-oder softwaremäßig implementierten Code-Generatoren erzeugt werden. Die Angabe der Offset-Sequenz für den Scrambling-Code bzw. den Spreizcode sowie die Angabe der Generator-Identifikations-Nummer legt in eindeutiger Weise die Generierung des Codes fest. Einzelheiten sind der'UMTS-Spezifikation 3 GPP: Spreading and Modulation (FDD), 3rd Generation Partnership Project TS 25.213 V4.2.0 (2001-12), in Kapitel 5.2.2, zu entnehmen. Für das Verständnis der vorliegenden Erfindung genügt die Feststellung, dass durch die Parameter scr_gen_id_r_y, scr_gen_offset_r_y die zu verwendende Scrambling-Sequenz und durch die Parameter spr_gen_id_r_y und spr_gen_offset_r_y der für die Entspreizung einzusetzende Spreizcode für die Demodulator-Einheit y des Rake-Fingers r eindeutig definiert sind.

Die weiteren Einträge der Tabelle 1 sind für den Fachmann ebenfalls verständlich. Der Mehrantennenmodus STTD ist im UMTS-Standard definiert und betrifft das Zuschalten einer zweiten Sendeantenne (sog. senderseitige Antennendiversität).

Die Tabelle 1 umfasst somit 32 (Anzahl der MC-Rake-Finger) x 4 (Anzahl der Demodulator-Einheiten pro MC-Rake-Finger) = 128 Zeileneinträge. Jeder Zeileneintrag repräsentiert einen Parametersatz. Jeder Parametersatz kann durch maximal 64 Bit codiert werden.

Während des Betriebs können die MC-Rake-Finger 10, 10.1, ..., 10.q (in Tabelle 1 als MC_1_1, ..., MC_32_4 notiert) permanent über die Datenverbindung 110 und den zweiten Eingang 109 des Multiplexers MUX auf den Parameterspeicher PAR_RAM zugreifen. Die Einrichtung der 32 MC-Rake-Finger 10, 10.1, ..., 10.q kann in insgesamt 128 Systemtakten eines die Hardware versorgenden hochfrequenten Taktsignals durchgeführt werden, d.h. es werden in einem Systemtakt die Parameter für eine Demodulator-Einheit eines MC-Rake-Fingers 10, 10.1, ..., 10.q ausgelesen. Bei 4 Systemtakten für die vier Demodulator-Einheiten eines MC-Rake-Fingers 10, 10.1, ..., 10.q ergeben sich insgesamt 32 (Anzahl der RAKE-Finger) x 4 Systemtakte = 128 erforderliche Systemtakte für den maximal erforderlichen Zugriff auf den Parameterspeicher PAR_RAM. Wenn als Systemtakt 124,8 MHz gewählt wird, können die Parameter von allen 32 MC-Rake-Fingern 10, 10.1, ..., 10.q mit jeweils vier Demodulator-Einheiten innerhalb von vier Chip-Takten geändert werden (4 Chips = 130 Systemtakte von 124,8 MHz). D.h., bevor die MC-Rake-Finger 10, 10.1, ..., 10.q aktiviert werden können, müssen zuvor in vier Chip-Takten die Parametersätze für die MC-Rake-Finger 10, 10.1., ..., 10.q ausgelesen werden.

Nach der Einrichtung der zu allokierenden MC-Rake-Finger 10, 10.1, ..., 10.q kann das Auslesen des Parameterspeichers PAR_RAM unterdrückt werden. Einträge, die bereits ausgelesen wurden, werden einfach übersprungen.

Im Folgenden wird der Prozess beschrieben, mittels welchem die Parameter eines bestimmten MC-Rake-Fingers r (oder auch nur einer Demodulator-Einheit y davon) geändert werden. Die Anforderung für die Änderung erfolgt durch den DSP. Ursache hierfür kann z.B. sein, dass ein neuer Datenkanal detektiert werden soll oder dass bestimmte Messaufgaben anhand von Kontrollkanälen von dem MC-Rake-Finger r zwischenzeitlich durchzuführen sind.

Der neue Parametersatz für die Demodulator-Einheit y des MC-Rake-Fingers r wird über die Schreib-Schnittstelle IF_W und die Datenverbindungen 101 und 102 in die Parameter-Änderungsspeicher PAR_CHG_RAM1 und PAR_CHG_RAM2 geschrieben. Ferner werden die in Tabelle 2 dargestellten Einträge in den Verwaltungsspeicher SCHED_RAM aktualisiert. Die Einträge in Tabelle 2 gehen davon aus, dass alle Demodulator-Einheiten eines MC-Rake-Fingers 10, 10.1, ..., 10.q simultan geändert werden. Der Fall, dass nur eine bzw. nicht alle Demodulator-Einheiten eines MC-Rake-Fingers 10, 10.1, ..., 10.q geändert werden, ist ebenfalls möglich und kann als Erweiterung des betrachteten Beispiels angesehen werden. Die Tabelle 2 würde dann wie die Tabelle 1 eine Anzahl von 128 Zeileneinträgen aufweisen.

Tabelle 2

| MC_1 | MC_1_tact, MC_1_change |
|------|------------------------|
| .... | |
| MC_16 | MC_16_tact, MC_16_change |
| .... | |
| MC_32 | MC_32_tact, MC_32_change |

Dabei bezeichnen:

| MC_r: | den MC-Rake-Finger der Nummer r |
|-------|-------------------------------|
| MC_r_tact: | eine Zeitangabe tact, zu welcher der neue Parametersatz für den MC-Rake-Finger der Nummer r aktiviert werden soll |
| MC_r_change : | ein Änderungsflag, welcher mit dem Wert 1 anzeigt, dass eine Änderung der Parameter für den MC-Rake-Finger r ansteht. |

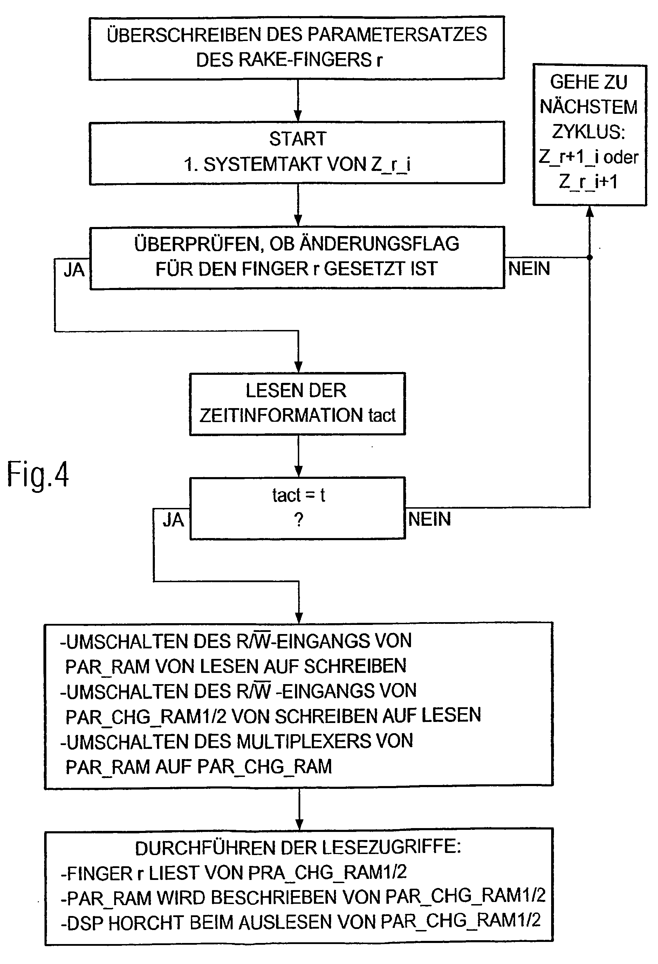

Das Laden der beiden Parameter-Änderungsspeicher PAR_CHG_RAM1 und PAR_CHG_RAM2 sowie das Beschreiben des Verwaltungsspeichers SCHED_RAM muss selbstverständlich so frühzeitig erfolgen, dass es eine ausreichende Zeitdauer vor der Aktivierungszeit tact abgeschlossen ist. In der Praxis hat der DSP üblicherweise zwei bis drei Zeitschlitze Zeit, um die Speicher PAR_CHG_RAM1, PAR_CHG_RAM2 und SCHED_RAM zu laden.
Danach liegen der oder die neuen Parametersätze zugriffsbereit in den Parameter-Änderungsspeichern PAR_CHG_RAM1 und PAR_CHG_RAM2 vor. Gleichzeitig gibt es für jeden zu ändernden MC-Rake-Finger r (dessen Änderungsflag den Wert 1 aufweist) eine Zeitangabe tact, wann diese Parameter tatsächlich im Rake-Empfänger aktualisiert bzw. aktiviert werden sollen.
In einem sich alle 4 Chip-Takte wiederholenden Zyklus Z_r_i wird überprüft, ob das Änderungsflag MC_r_change für den MC-Rake-Finger r gesetzt ist, siehe Fig 4. Mit der Systemfrequenz von 124,8 MHz können pro MC-Rake-Finger r (32 Rake-Finger insgesamt) 4 Systemtakte für einen Zyklus reserviert werden, um die Rake-Parameter aller 4 Demodulator-Einheiten innerhalb von 4 Chips zu verändern. Die Überprüfung, ob das Änderungsflag MC_r_change des MC-Rake-Fingers r gesetzt wurde, findet jeweils in dem ersten der dem MC-Rake-Finger r zugeordneten 4 Systemtakte Z_r_i statt. Sie erfolgt in der Weise, dass die Steuerung CON in jedem ersten Systemtakt von 4 Systemtakten, die jedem MC-Rake-Finger r zugeordnet sind, die in der Tabelle 2 enthaltenen Einträge abtastet. Sofern deren Änderungsflag MC_r_change für den MC-Rake-Finger r den Wert 0 aufweist, kann der Speichereintrag für diesen MC-Rake-Finger r übersprungen werden. Andernfalls wird der Aktivierungszeitpunkt MC_r_tact ausgelesen und überprüft, ob er mit der aktuellen Zeit t übereinstimmt. Wenn dies nicht der Fall ist, muss in dem betrachteten Zyklus nichts unternommen werden und die Überprüfung wird im nächsten Zyklus in der gleichen Weise wiederholt. Sofern die Steuerung CON feststellt, dass der Aktivierungszeitpunkt tact für einen bestimmten MC-Rake-Finger r erreicht ist (d.h. MC_r_tact = t), werden die folgenden Schritte vorgenommen:

- Der aktuelle Parametersatz wird nicht mehr aus dem Parameterspeicher PAR_RAM sondern aus den Parameter-Änderungsspeichern PAR_CHG_RAM1 und PAR_CHG_RAM2 bezogen. Dies erfolgt dadurch, dass der Schreib-/Lese-Eingang der Parameter-Änderungsspeicher PAR_CHG_RAM1 und PAR_CHG_RAM2 von Schreiben auf Lesen umgeschaltet wird.

- Gleichzeitig wird der Multiplexer MUX von dem zweiten Eingang 109 auf den ersten Eingang 106 umgeschaltet.

- Gleichzeitig soll der Parameterspeicher PAR_RAM mit dem neuen Parametersatz aktualisiert werden. Dies erfolgt dadurch, dass der Schreib-/Lese-Eingang des Parameterspeichers PAR_RAM von Lesen auf Schreiben umgeschaltet wird.

Anschließend erfolgen die Speicherzugriffe zur Übergabe der neuen Parameter an den MC-Rake-Finger r und an den Parameterspeicher PAR_RAM. Darüber hinaus können die übertragenen Parameter, wie bereits erwähnt, über die Datenverbindung 111, das Tor GATE und die Lese-Schnittstelle IF_R dem DSP zu Kontrollzwecken zugeleitet werden.

Es wird darauf hingewiesen, dass der DSP in dieser Ausführung keinen direkten Lesezugriff auf den Parameterspeicher PAR_RAM ausüben kann. Die in Fig. 3 dargestellte Schaltung ermöglicht lediglich eine "Horchfunktion", d.h. der DSP kann die von der erfindungsgemäßen Vorrichtung zu den MC-Rake-Fingern 10, 10.1, ..., 10.q übertragenen Parameter mitlesen.

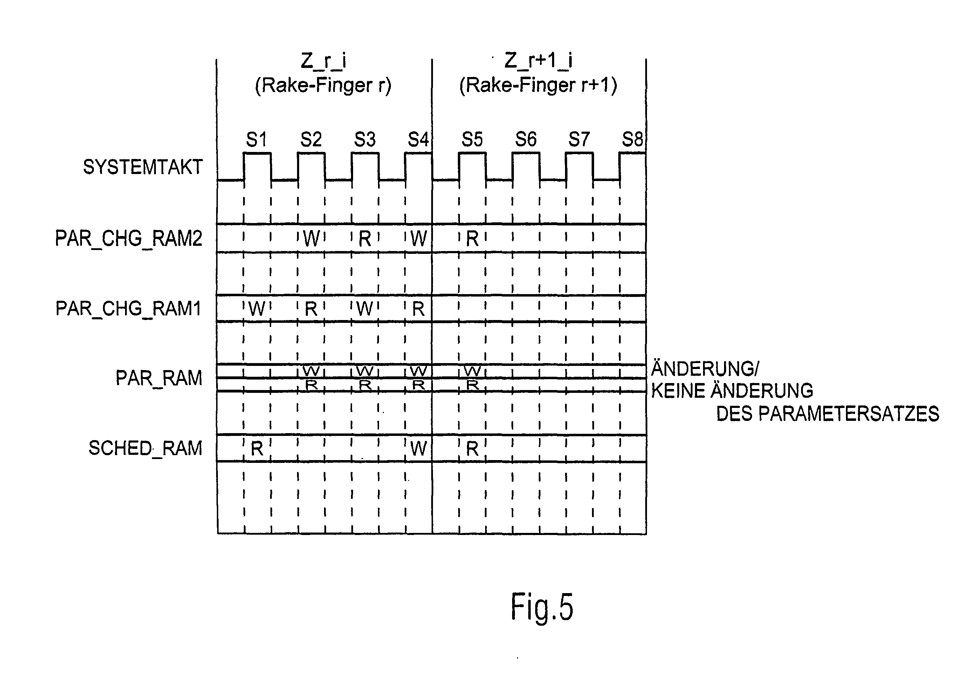

Im Folgenden wird der zeitliche Ablauf der Speicher- und Lesevorgänge in der erfindungsgemäßen Vorrichtung anhand Fig. 5 erläutert.

Die in Fig. 3 dargestellte Vorrichtung arbeitet im Bereich rechts von den Schnittstellen IF_W und IF_R mit einem Systemtakt von z.B. 124.8 MHz. Die Dauer eines Chips beträgt damit 32,5 Systemtakte bzw. die Dauer von 4 Chips beträgt 130 Systemtakte. Der Chip-Zähler CT zählt die Chips anhand eines Chip-Signals ch beginnend mit dem Rahmenanfang. Der Rahmenanfang wird dem Chip-Zähler CT über das Synchronisationssignal fr_sync mitgeteilt. Ferner erhält der Chip-Zähler CT ein Synchronisationssignal sl_sync für den Zeitschlitz-Anfang.

In Fig. 5 sind acht aufeinander folgende Systemtakte S1, S2, ..., S8 (entspricht zwei Zyklen) dargestellt. Der gesamte zeitliche Ablauf der Vorrichtung 100 wird auf der Basis eines festen Zeitrasters durchgeführt, dessen Zeitabstände jeweils vier Chip-Takte betragen. Innerhalb der 4 Chip-Takte werden wie bereits erwähnt jedem der 32 MC-Rake-Finger r vier Systemtakte zugeordnet. Die Fig. 5 zeigt einen Zyklus Z_r_i bestehend aus 4 Systemtakten für den MC-Rake-Finger r und einen Zyklus Z_r+1_i bestehend aus 4 Systemtakten für den MC-Rake-Finger r+1. Der Index i bezeichnet ein 4 Chip-Intervall des Zeitrasters. Die Systemtakte S1 bis S4 definieren somit den i-ten Zyklus Z_r_i für den MC-Rake-Finger r, die Systemtakte S5 bis S8 definieren den i-ten Zyklus Z_r+1_i für den MC-Rake-Finger r+1.

Der erste Parameter-Änderungsspeicher PAR_CHG_RAM1 kann nur in ungeradzahligen Systemtakten S1, S3, S5, S7 beschrieben und in geradzahligen Systemtakten S2, S4, S6, S8 gelesen werden. Beim zweiten Parameter-Änderungsspeicher PAR_CHG_RAM2 erfolgen die Schreibzugriffe nur in den Systemtakten S2, S4, S6, S8 und die Lesezugriffe stets in den ungeradzahligen Systemtakten S1, S3, S5, S7.

Da die Breite der Datenverbindungen 101, 102, 103, 104, 105, 110 und 111 jeweils 64 Bit beträgt, kann in einem Systemtakt genau ein Parametersatz über diese Datenverbindungen übertragen werden. D.h., dass in vier Systemtakten die vier Parametersätze für die vier Demodulator-Einheiten y = 1, ..., 4 eines MC-Rake-Fingers r in die beiden Parameter-Änderungsspeicher PAR_CHG_RAM1/2 geschrieben werden können, und dass in ebenfalls vier Systemtakten vier Parametersätze (jeweils alternierend) aus den beiden Parameter-Änderungsspeichern PAR_CHG_RAM1/2 ausgelesen werden können. In dem hier dargestellten Beispiel wird der erste Parameter-Änderungsspeicher PAR_CHG_RAM1 in den Systemtakten S1 und S3 beschrieben (W) und in den Systemtakten S2 und S4 ausgelesen (R). Der zweite Parameter-Änderungsspeicher wird in den Systemtakten S2 und S4 beschrieben (W) und in den Systemtakten S3 und S5 ausgelesen (R). Es wird deutlich, dass beide Parameter-Änderungsspeicher alternierend und zeitlich versetzt zueinander beschrieben und ausgelesen werden.

Der Parameterspeicher PAR_RAM kann in jedem Systemtakt entweder beschrieben (W) oder ausgelesen (R) werden. Sofern keine Änderung des Parametersatzes erfolgt, ist der Lese-Modus eingestellt. Bei einer Änderung des Parametersatzes wird in den Schreib-Modus umgeschaltet. Im vorliegenden Beispiel werden in den Systemtakten S2, S3, S4 und S5 die aus den Parameter-Änderungsspeichern PAR_CHG_RAM1/2 in diesen Systemtakten ausgelesenen Parametersätze in den Parameterspeicher PAR_RAM geschrieben.

Der Verwaltungsspeicher SCHED_RAM wird stets im vierten Systemtakt S4 eines Zyklus beschrieben und im ersten Systemtakt eines Zyklus ausgelesen. D.h., es wird in jedem ersten Takt eines Zyklus Z_r_i, Z_r+1_i ... geprüft, ob eine Aktivierung eines neuen Parametersatzes erforderlich wird. Wenn dies der Fall ist, werden die Parameter in den folgenden vier Systemtakten S2, S3, S4 und S5 übertragen.

Ein Vorteil des hier verwendeten Zeitrasters Z_r_i, Z_r+1_i, ... bestehend aus jeweils vier Systemtakten besteht darin, dass dieses Zeitraster auch für die Demodulation der Daten in den MC-Rake-Fingern 10, 10.1, ..., 10.q verwendet wird. Die Vorrichtung zur Datenübergabe und die MC-Rake-Finger 10, 10.1, ..., 10.q arbeiten also auf der Grundlage ein und desselben Zeitrasters. Dies ist der Grund dafür, dass zwei Parameter-Änderungsspeicher PAR_CHG_RAM1 und PAR_CHG_RAM2 verwendet werden. Ansonsten könnten nicht innerhalb von vier Chip-Takten die Parameter für einen MC-Rake-Finger 10; 10.1; ...; 10.q von der Vorrichtung 100 in den MC-Rake-Finger 10, 10.1, ..., 10.q übertragen werden und zusätzlich ein Beschreiben der Parameter-Änderungsspeicher PAR_CHG_RAM1, PAR_CHG_RAM2 von Seiten des DSP zugelassen werden. Man bemerke, dass in dieser Ausführung Single-Port-RAMs benutzt werden. Dual-Port-RAMs können die Restriktion bzgl. mehrerer Paramter-Änderungsspeicher PAR_CHG_RAM1/2 beseitigen, allerdings mit dem Nachteil eines größeren Flächenbedarfs.

Schließlich wird darauf hingewiesen, dass der Datenbus DB und die Datenverbindung zu dem DSP eine geringere Bitbreite von z.B. 16 Bit aufweisen. Ferner arbeitet der DSP mit einem anderen Arbeitstakt, z.B. 26, 52 oder 78 MHz. Aus diesen Gründen müssen in den Schnittstellen IF_ W und IF_R. interne Zwischenpuffer vorhanden sein, in welchen etwa die Parametermenge von drei MC-Rake-Fingern, d.h. 12 Parametersätze, zwischengespeichert werden können.

**Patentansprüche**

1. Rake-Empfangsverfahren, mit den Schritten:

   (a) Betreiben eines Rake-Fingers (RF1, RF2, ..., RFp; 10, 10.1, ..., 10.q) mit einem ersten Parametersatz, indem dieser auf den in einem ersten Speicherbereich (PAR_RAM) für den Rake-Finger (RF1, RF2, ..., RFp; 10, 10.1, ..., 10.q) verfügbar gehaltenen ersten Parametersatz zugreift;
   (b) Laden eines zweiten Parametersatzes in einen zweiten Speicherbereich (PAR_CHG_RAM1/2) ;
   (c) Überprüfen, ob eine Umschaltbedingung (MC_r_change, MC_r_tact) vorliegt; und
   (d) Umschalten (MUX) des Zugriffs des Rake-Fingers (RF1, RF2, ..., RFp; 10, 10.1, ..., 10.q) von dem ersten Speicherbereich (PAR_RAM) in den zweiten Speicherbereich, sobald das Vorliegen der Umschaltbedingung (MC_r_change) festgestellt wird.

2. Rake-Empfangsverfahren nach Anspruch 1,
   **dadurch gekennzeichnet, dass**
   das Überprüfen des Vorliegens der Umschaltbedingung (MC_r_change, MC_r_tact) in Zeitabständen eines festen Zeitrasters (Z_r_i, Z_r+1_i) erfolgt.

3. Rake-Empfangsverfahren nach Anspruch 2,
   **dadurch gekennzeichnet, dass**
   die Zeitabstände kürzer als eine Zeitschlitzdauer sind.

4. Rake-Empfangsverfahren nach Anspruch 3,
   **dadurch gekennzeichnet, dass**
   die Zeitabstände jeweils 4 Chip-Zeitdauern ($T_c$) sind.

5. Rake-Empfangsverfahren nach Anspruch 4,
   **dadurch gekennzeichnet, dass**
   innerhalb des Zeitabstandes von 4 Chip-Zeitdauern ($T_c$) die Umschaltbedingung aller implementierten Rake-Finger (RF1, RF2, ..., RFp; 10, 10.1, ..., 10.q), insbesondere 32 Stück, überprüft werden.

6. Rake-Empfangsverfahren nach einem der vorhergehenden Ansprüche,
   **gekennzeichnet durch** den folgenden Schritt: (e) Laden des zweiten Parametersatzes in den ersten Speicherbereich (PAR_RAM).

7. Rake-Empfangsverfahren nach Anspruch 6,
   **dadurch gekennzeichnet, dass**
   das Zugreifen des Rake-Fingers (RF1, RF2, ..., RFp; 10, 10.1, ..., 10.q) auf den zweiten Parametersatz und das Laden des zweiten Parametersatzes in den ersten Speicherbereich (PAR_RAM) mittels ein und derselben auf den zweiten Speicherbereich (PAR_CHG_RAM1/2) ausgeübten Leseoperation erfolgen.

8. Rake-Empfangsverfahren nach einem der vorhergehenden Ansprüche,
   **dadurch gekennzeichnet, dass**
   beim Laden des zweiten Parametersatzes in den zweiten Speicherbereich (PAR_CHG_RAM1/2) gemäß Schritt (b) in einem Verwaltungsspeicher (SCHED_RAM)

   - ein Änderungsflag (MC_r_change) gesetzt wird, und
   - eine Zeitinformation (tact; MC_r_tact) eingetragen wird, die angibt, zu welchem Zeitpunkt die Umschaltung (Schritt (d)) des Rake-Fingers (RF1, RF2, ..., RFp; 10, 10.1, ..., 10.q) erfolgen soll.

9. Rake-Empfangsverfahren nach Anspruch 8,
   **dadurch gekennzeichnet, dass**
   die Umschaltbedingung erfüllt ist, wenn

   - das Änderungsflag (MC_r_change) gesetzt ist, und
   - der Umschaltzeitpunkt (tact; MC_r_tact) erreicht ist.

10. Rake-Empfangsverfahren nach einem der vorhergehenden Ansprüche,

**dadurch gekennzeichnet, dass**
die Parametersätze die folgenden Informationen enthalten:

- den Verzögerungs-Offset (deloff_r) des Rake-Fingers,
- Informationen (scr_gen_id_r_y ; scr_gen_offset_r_y) betreffend die zu verwendende Scrambling-Sequenz, und/oder
- Informationen (spr_gen_id_r_y ; spr_gen_offset_r_y) betreffend den zu verwendenden Spreizcode, und/oder
- den Spreizfaktor (sf; sf_r_y).

**11.** Rake-Empfangsvorrichtung, mit

- einem ersten Speicherbereich (PAR_RAM) für einen ersten Parametersatz von Betriebsparametern für einen Rake-Finger (RF1, RF2, ..., RFp; 10, 10.1, ..., 10.q),
- einem zweiten Speicherbereich (PAR_CHG_RAM1, PAR_CHG_RAM2) für einen zweiten Parametersatz von Betriebsparametern für den Rake-Finger (RF1, RF2, ..., RFp; 10, 10.1, ..., 10.q),
- einem Steuermittel (CON), welches überprüft, ob eine Umschaltbedingung (MC_r_change, MC_r_tact) vorliegt, und
- einem Umschaltmittel (MUX), welches ein Umschalten des Zugriffs des Rake-Fingers (RF1, RF2, ..., RFp; 10, 10.1, ..., 10.q) von dem ersten Speicherbereich (PAR_RAM) in den zweiten Speicherbereich (PAR_CHG_RAM1, PAR_CHG_RAM2) vornimmt, sobald das Steuermittel (CON) das Vorliegen der Umschaltbedingung feststellt.

**12.** Rake-Empfangsvorrichtung nach Anspruch 11,
**dadurch gekennzeichnet, dass**
das Steuermittel (CON) die Überprüfung des Vorliegens der Umschaltbedingung (MC_r_change, MC_r_tact) in Zeitabständen eines festen Zeitrasters (Z_r_i, Z_r+1_i), insbesondere nach jeweils 4 Chip-Zeitdauern ($T_c$), durchführt.

**13.** Rake-Empfangsvorrichtung nach Anspruch 12,
**dadurch gekennzeichnet, dass**
das Steuermittel (CON) die Überprüfung des Vorliegens der Umschaltbedingung (MC_r_change, MC_r_tact) aller implementierten Rake-Finger (RF1, RF2, ..., RFp; 10, 10.1, ..., 10.q), insbesondere 32 Stück, innerhalb des Zeitabstandes von 4 Chip-Zeitdauern ($T_c$) durchführt.

**14.** Rake-Empfangsvorrichtung nach Anspruch 11 oder 13,
**gekennzeichnet durch**
eine Datenverbindung (105), über welche sowohl der Rake-Finger (RF1, RF2, ..., RFp; 10, 10.1, ..., 10.q) als auch der erste Speicherbereich (PAR_RAM) auf die Daten des zweiten Speicherbereichs (PAR_CHG_RAM1, PAR_CHG_RAM2) zugreifen kann.

**15.** Rake-Empfangsvorrichtung nach einem der Ansprüche 11 bis 14,
**gekennzeichnet durch**
einen Verwaltungsspeicher (SCHED_RAM), in welchem

- ein Änderungsflag (MC_r_change) angibt, ob ein zweiter Parametersatz in dem zweiten Speicherbereich (PAR_CHG_RAM1, PAR_CHG_RAM2) geladen ist, und
- eine Zeitinformation (tact; MC_r_tact) angibt, zu welchem Zeitpunkt die Umschaltung des Rake-Fingers (RF1, RF2, ..., RFp; 10, 10.1, ..., 10.q) erfolgen soll.

**16.** Rake-Empfangsvorrichtung nach einem der Ansprüche 11 bis 15,
**dadurch gekennzeichnet, dass**
der zweite Speicherbereich (PAR_CHG_RAM1, PAR_CHG_RAM2) durch mehrere einzelne RAM realisiert ist.

**17.** Rake-Empfangsvorrichtung nach einem der Ansprüche 11 bis 16,
**gekennzeichnet durch**
einen Prozessor (DSP), welcher über eine Datenverbindung (111) mit dem Ausgang des Umschaltmittels (MUX) in Zugriffsverbindung steht.

**Claims**

1.  Rake receiver method having the following steps:

    (a) a rake finger (RF1, RF2, ..., RFp; 10, 10.1, ..., 10.q) is operated with a first parameter set by accessing the first parameter set, which is kept available in a first memory area (PAR_RAM) for the rake finger (RF1, RF2, ..., RFp; 10, 10.1, ..., 10.q);
    (b) a second parameter set is loaded in a second memory area (PAR_CHG_RAM1/2);
    (c) a check is carried out to determine whether a switching condition (MC_r_change, MC_r_tact) is satisfied; and
    (d) the access for the rake finger (RF1, RF2, ..., RFp; 10, 10.1, ..., 10.q) is switched (MUX) from the first memory area (PAR_RAM) to the second memory area as soon as the existence of the switching condition (MC_r_change) is found.

2.  Rake receiver method according to Claim 1,
    **characterized in that**
    the check for the presence of the switching condition (MC r change, MC_r_tact) is carried out at time intervals in a fixed time frame (Z_r_i, Z_r+1_i)

3.  Rake receiver method according to Claim 2,
    **characterized in that**
    the time intervals are shorter the one time slot period.

4.  Rake receiver method according to Claim 3,
    **characterized in that**
    the time intervals are each 4 chip time periods ($T_c$).

5.  Rake receiver method according to Claim 4,
    **characterized in that** the switching condition for all of the implemented rake fingers (RF1, RF2, ..., RFp; 10, 10.1, ..., 10.q), particular 32 of them, is checked within the time interval of 4 chip time periods ($T_c$).

6.  Rake receiver method according to one of the preceding claims,
    **characterized by** the following step:

    (e) the second parameter set is loaded in the first memory area (PAR_RAM).

7.  Rake receiver method according to Claim 6,
    **characterized in that** the rake finger (RF1, RF2, ..., RFp; 10, 10.1, ..., 10.q) accesses the second parameter set and loads the second parameter set into the first memory area (PAR_RAM) by means of one and the same read operation, which is carried out on the second memory area (PAR_CHG_RAM1/2).

8.  Rake receiver method according to one of the preceding claims,
    **characterized in that**,
    while loading the second parameter set into the second memory area (PAR_CHG_RAM1/2) in accordance with step (b),

    - a change flag (MC_r_change) is set in an administration memory (SCHED_RAM) and
    - time information (tact; MC_R_tact) is entered in the administration memory (SCHED_RAM) which indicates the time at which the switching (step (d)) of the rake finger (RF1, RF2, ..., RFp; 10, 10.1, ..., 10.q) should take place.

9.  Rake receiver method according to Claim 8,
    **characterized in that**
    the switching condition is satisfied when

    - the change flag (MC_r_change) is set, and
    - the switching time (tact; MC_r_tact) has been reached.

10. Rake receiver method according to one of the preceding claims,

**characterized in that**
the parameter sets contain the following information:

- the delay offset (deloff_r) for the rake finger,
- information (scr_gen_id_r_y ; scr_gen_offset_r_y) relating to the scrambling sequence to be used, and/or
- information (spr_gen_id_r_y ; spr_gen_offset_r_y) relating to the spreading code to be used, and/or
- the spreading factor (sf; sf_r_y).

**11.** Rake receiving apparatus having

- a first memory area (PAR_RAM) for a first parameter set of operating parameters for a rake finger (RF1, RF2, ..., RFp; 10, 10.1, ..., 10.q),
- a second memory area (PAR_CHG_RAM1, PAR_CHG_RAM2) for a second parameter set of operating parameters for the rake finger (RF1, RF2, ..., RFp; 10, 10.1, ..., 10. q),
- a control means (CON) which check whether a switching condition (MC_r_change, MC_r_tact) is satisfied, and
- a switching means (MUX) which switches the access for the rake finger (RF1, RF2, ..., RFp; 10, 10.1, ..., 10.q) from the first memory area (PAR_RAM) to the second memory area (PAR_CHG_RAM1, PAR_CHG_RAM2) as soon as the control means (CON) find that the switching condition has been satisfied.

**12.** Rake receiving apparatus according to Claim 11,
**characterized in that**
the control means (CON) checks for the satisfaction of the switching condition (MC_r_change, MC_r_tact) at time intervals in a fixed time frame (Z_r_i, Z_r+1_i) in particular after every 4 chip time periods ($T_c$).

**13.** Rake receiving apparatus according to Claim 12,
**characterized in that** the control means (CON) checks for the satisfaction of the switching condition (MC_r_change, MC_r_tact) of all the implemented rake fingers (RF1, RF2, ..., RFp ; 10, 10.1, ..., 10.q) in particular 32 of them, within the time interval of 4 chip time periods ($T_c$).

**14.** Rake receiving apparatus according to Claim 11 or 13,
**characterized by**
a data link (105) via which both the rake fingers (RF1, RF2, ..., RFp; 10, 10.1, ..., 10. q) and the first memory area (PAR_RAM) can access the data in the second memory area (PAR_CHG_RAM1, PAR_CHG_RAM2).

**15.** Rake receiving apparatus according to one of Claims 11 to 14,
**characterized by**
an administration memory (SCHED_RAM) in which

- a change flag (MC_r_change) indicates whether a second parameter set has been loaded in the second memory area (PAR_CHG_RAM1, PAR_CHG_RAM2), and
- time information (tact; MC r tact) indicates the time at which the switching of the rake finger (RF1, RF2, ..., RFp; 10, 10.1, ..., 10. q) should take place.

**16.** Rake receiving apparatus according to one of Claims 11 to 15,
**characterized in that**
the second memory area (PAR_CHG_RAM1, PAR_CHG_RAM2) is formed by a number of individual RAMs.

**17.** Rake receiving apparatus according to one of Claims 11 to 16,
**characterized by**
a processor (DSP) which is connected for access purposes via a data link (111) to the output of the switching means (MUX).

**Revendications**

**1.** Procédé de réception Rake comprenant les stades dans lesquels :

(a) on fait fonctionner un doigt Rake (RF1, RF2, ..., RFp ; 10, 10.1, ..., 10.q) avec un premier jeu de paramètres par le fait que celui-ci accède au premier jeu de paramètres maintenu disponible dans une première zone (PAR_RAM) de mémoire pour le doigt Rake (RF1, RF2, ..., RFp ; 10, 10.1, ..., 10. q) ;

(b) on charge un deuxième jeu de paramètres dans une deuxième zone (PAR_CHG_RAM1/2) de mémoire ;

(c) on contrôle s'il y a une condition (MC_r_change, MC_r_tact) de commutation ; et

(d) on commute (MUX) l'accès du doigt Rake (RF1, RF2, ..., RFp ; 10, 10.1, ..., 10.q) de la première zone (PAR_RAM) de mémoire à la deuxième zone de mémoire dès que la présence de la condition (MC_r_change) de commutation est constatée.

**2.** Procédé de réception Rake suivant la revendication 1,
**caractérisé en ce qu'**on effectue le contrôle de la présence de la condition (MC_r_change, MC_r_tact) de commutation à des intervalles de temps d'une trame (Z_r_i, Z_r+1_i) de temps fixe.

**3.** Procédé de réception Rake suivant la revendication 2,
**caractérisé en ce que** les intervalles de temps sont plus courts qu'une durée de créneau temporel.

**4.** Procédé de réception Rake suivant la revendication 3, **caractérisé en ce que** les intervalles de temps sont, respectivement, des durées de temps de 4 puces ($T_c$).

**5.** Procédé de réception Rake suivant la revendication 4,
**caractérisé en ce que**, dans l'intervalle de temps de durée de temps de 4 puces ($T_c$), on contrôle la condition de commutation de tous les doigts Rake (RF1, RF2, ..., RFp ; 10, 10.1, ..., 10.q) impliqués, notamment de 32 pièces.

**6.** Procédé de réception Rake suivant l'une des revendications précédentes,
**caractérisé par** le stade suivant :

(e) on charge le deuxième jeu de paramètres dans la première zone (PAR_RAM) de mémoire.

**7.** Procédé de réception Rake suivant la revendication 6,
**caractérisé en ce que** l'accès du doigt Rake (RF1, RF2, ..., RFp ; 10, 10.1, ..., 10.q) au deuxième jeu de paramètres et le chargement du deuxième jeu de paramètres dans la première zone (PAR_RAM) de mémoire s'effectuent au moyen d'une seule et même opération de lecture exécutée sur la deuxième zone (PAR_CHG_RAM1/2) de mémoire.

**8.** Procédé de réception Rake suivant l'une des revendications précédentes,
**caractérisé en ce que**, lors du chargement du deuxième jeu de paramètres dans la deuxième zone (PAR_CHG_RAM1/2) de mémoire suivant le stade (b),

- on met dans une mémoire (SCHED_RAM) de gestion un drapeau (MC_r_change) de modification ; et
- on porte dans la mémoire (SCHED_RAM) de gestion une information (tact ; MC_r_tact) de temps qui indique à quel instant il faut effectuer la commutation (stade (d)) du doigt Rake (RF1, RF2, ..., RFp ; 10, 10.1, ..., 10.q).

**9.** Procédé de réception Rake suivant la revendication 8,
**caractérisé en ce que** la condition de commutation est satisfaite si

- le drapeau (MC_r_change) de modification est mis ; et
- le point (tact ; MC_r_tact) de commutation est atteint.

**10.** Procédé de réception Rake suivant l'une des revendications précédentes,
**caractérisé en ce que**
les jeux de paramètres contiennent les informations suivantes :

- le décalage de temporisation (deloff_r) du doigt Rake ;
- des informations (scr_gen_id_r_y ; scr_gen_offset_r_y) concernant la séquence Scrambling à utiliser ; et/ou
- des informations (spr_gen_id_r_y ; spr_gen_offset_r_y) concernant le code d'étalement à utiliser ; et/ou
- le facteur (sf ; sf_r_y) d'étalement.

**11.** Dispositif de réception Rake comprenant

- une première zone (PAR_RAM) de mémoire pour un premier jeu de paramètres de fonctionnement d'un doigt Rake (RF1, RF2, ..., RFp ; 10, 10.1, ..., 10.q) ;
- une deuxième zone (PAR_CHG_RAM1 ; PAR_CHG_RAM2) de mémoire pour un deuxième jeu de paramètres de fonctionnement du doigt Rake (RF1, RF2, ..., RFp ; 10, 10.1, ..., 10.q) ;
- un moyen (CON) de commande qui contrôle s'il y a une condition (MC_r_change ; MC_r_tact) de commutation ; et
- un moyen (MUX) de commutation qui effectue une commutation de l'accès du doigt Rake (RF1, RF2, ..., RFp ; 10, 10.1, ..., 10.q) de la première zone (PAR_RAM) de mémoire à la deuxième zone (PAR_CHG_RAM1 ; PAR_CHG_RAM2) de mémoire dès que le moyen (CON) de commande constate la présence de la condition de commutation ;

**12.** Dispositif de réception Rake suivant la revendication 11,
**caractérisé en ce que**
le moyen (CON) de commande effectue le contrôle de la présence de la condition (MC_r_change ; MC_r_tact) de commutation à des intervalles de temps d'une trame ($Z\_r\_i$, $Z\_r+1\_i$) de temps fixe, notamment après des durées de temps de 4 puces ($T_c$), respectivement.

**13.** Dispositif de réception Rake suivant la revendication 12,
**caractérisé en ce que**
le moyen (CON) de commande effectue le contrôle de la présence de la condition (MC_r_change ; MC_r_tact) de commutation de tous les doigts (RF1, RF2, ..., RFp ; 10, 10.1, ..., 10.q) impliqués, notamment de 32 pièces, dans l'intervalle de temps de durées de temps de 4 puces ($T_c$).

**14.** Dispositif de réception Rake suivant la revendication 11 ou 13,
**caractérisé par**
une connexion (105) de données par laquelle tant le doigt Rake (RF1, RF2, ..., RFp ; 10, 10.1, ..., 10.q) qu'également la première zone (PAR_RAM) de mémoire peuvent accéder aux données de la deuxième zone (PAR_CHG_RAM1 ; PAR_CHG_RAM2) de mémoire.

**15.** Dispositif de réception Rake suivant l'une des revendications 11 à 14,
**caractérisé par**

- une mémoire (SCHED_RAM) de gestion dans laquelle un drapeau (MC_r_change) de modification indique si un deuxième jeu de paramètres est chargé dans la deuxième zone (PAR_CHG_RAM1 ; PAR_CHG_RAM2) de mémoire ; et
- une information (tact ; MC_r_tact) de temps indique à quel instant il faut effectuer la commutation du doigt Rake (RF1, RF2, ..., RFp ; 10, 10.1, ..., 10.q).

**16.** Dispositif de réception Rake suivant l'une des revendications 11 à 15,
**caractérisé en ce que**
la deuxième zone (PAR_CHG_RAM1, PAR_CHG_RAM2) de mémoire est réalisée par plusieurs RAM individuelles.

**17.** Dispositif de réception Rake suivant l'une des revendications 11 à 16,
**caractérisé par**
un processeur (DSP) qui est en relation d'accès avec la sortie du moyen (MUX) de commutation par l'intermédiaire d'une connexion (111) de données.

Fig.1

Fig.2

FIG. 3

EP 1 525 674 B1

ÜBERSCHREIBEN DES PARAMETERSATZES
DES RAKE-FINGERS r

GEHE ZU
NÄCHSTEM
ZYKLUS:
Z_r+1_i oder
Z_r_i+1

START
1. SYSTEMTAKT VON Z_r_i

ÜBERPRÜFEN, OB ÄNDERUNGSFLAG
FÜR DEN FINGER r GESETZT IST

JA                                    NEIN

LESEN DER
ZEITINFORMATION tact

Fig.4

tact = t
?

JA                                    NEIN

-UMSCHALTEN DES R/W̅-EINGANGS VON
 PAR_RAM VON LESEN AUF SCHREIBEN
-UMSCHALTEN DES R/W̅ -EINGANGS VON
 PAR_CHG_RAM1/2 VON SCHREIBEN AUF LESEN
-UMSCHALTEN DES MULTIPLEXERS VON
 PAR_RAM AUF PAR_CHG_RAM

DURCHFÜHREN DER LESEZUGRIFFE:
-FINGER r LIEST VON PRA_CHG_RAM1/2
-PAR_RAM WIRD BESCHRIEBEN VON PAR_CHG_RAM1/2
-DSP HORCHT BEIM AUSLESEN VON PAR_CHG_RAM1/2

Fig.5